# EUROPEAN PATENT SPECIFICATION

(11) **EP 0 934 814 B1**
(45) Date of publication and mention of the grant of the patent: **05.06.2002**
(21) Application number: 99610009.5
(22) Date of filing: 05.02.1999
(51) Int. Cl.: B29C 61/02

(54) **Method for the assembling and/or closing of pipe materials and a tool for use of the method**
Verfahren zum Zusammenstellen und/oder Schliessen von Rohrwerkstoffen und Werkzeug für dieses Verfahren
Procédé d'assemblage et/ou de fermeture d'éléments tubulaires et outil utilisé dans ce procédé

(30) Priority: 09.02.1998 DK 18398
(43) Date of publication of application: 11.08.1999
(73) Proprietor: Lögstör Rör A/S, 9670 Lögstör (DK)
(72) Inventor: Kirkegaard, Kim Jorgen Schultz, 9000 Aalborg (DK); Berth, Jorgen, 8900 Randers (DK); Petersen, Tommy, 2635 Ishoj (DK)
(74) Representative: Larsen, Hans Ole

(56) References cited:
- EP-A- 0 624 942
- GB-A- 1 597 470
- DATABASE WPI Section Ch, Week 198147 Derwent Publications Ltd., London, GB; Class A32, AN 1981-86156D XP002125683 & JP 56 129126 A (SUMITOMO ELECTRIC IND CO), 9 October 1981 (1981-10-09)

## Description

The invention concerns a method for the assembling and/or closing of pipe materials by means of an assembly piece made of a shrinkable plastic material, said assembly piece comprising at least two edge sections which face each other and extend substantially parallel with the longitudinal axis of the pipe items, the edge sections extending substantially at right-angles to the shrinkage direction.

From German patent no. 19 47 057 there is known a shrink-muff for wrapping around pipe connections, but where the edges are formed in such a manner that these are locked around the T-piece by means of a snap-lock arrangement. The system thus requires that the edges are of a special configuration, and that assembly pieces are produced in different sizes for pipes of different dimensions. Moreover, a manual tightening of the edges must be effected by means of a screw clamp in order to secure the edges during the actual shrinking.

A shrink-muff system is also known from European patent no. 265.199, where this comprises a pair of thickenings which are enclosed within a shrinkable material which is in connection with the shrink-muff itself, which hereafter is again surrounded by a tubular pipe element. Also in this case it is necessary to configure the shrink-muff in different sizes depending on the dimension of the pipe piece on which it is to be mounted. Moreover, it is not possible for the person mounting the muff to produce the thickenings (the filament bundle), the reason being that this must be done before the shrink-muff system can be supplied. The shrink-muff system can not be used as a part of a T-piece, as products following this principle can not be produced as anything other than straight sleeves. Furthermore, the use of the muff requires that the pipe pieces which are used in the assembly are brought together by sliding a profile in over the prefabricated thickenings. Moreover, there is great waste of the tubular closing elements produced for and forming part of each individual closure, which means that the use of the system is very expensive.

GB-A-1 597 470 discloses a heat-recoverable closure method and clip.

The object of the invention is to provide a method which makes it possible to use assembly elements/muffs/T-muffs without the muff having to be produced with free edge sections of special configuration, and without the muff having to be dimensioned in a certain manner in order to accommodate the dimensions of the pipe element on which the muff is required to be mounted. Moreover, the method makes it possible for the assembly element to be mounted without free pipe ends and while using existing muffs/assembly elements.

This object is achieved with a method of the kind disclosed in the introduction, said edge sections being introduced through a slot/opening in a holding tool so that the edges of the edge sections lie freely in relation to the holding tool, after which the assembly piece is shrunk so that the free-lying edges are thickened.

The method thus makes it possible for pipe materials to be assembled and repaired by means of muffs and T-pieces regardless of their diameter, in that the muff/T-piece is cut up longitudinally, and the flaps/edges created hereby are led through the holding tool, after which the shrinking can be effected, for example by the application of heat. The dimension of the material is changed as a consequence of this having been expanded before the application of heat, and in the process it will attempt to regain its original thickness, whereby the material wedges itself firmly in the slot and is self-locking. With this shrinking, a welding effect can arise which ensures that the assembly is permanent and tight depending on the material selected. If additives are used, e.g. adhesive/mastic or the like, it is ensured that the assembly is permanent and tight.

The tool can subsequently be removed either by this being cut below the surface which faces towards the pipe, or by the tool being broken into pieces or dismantled. It can also be chosen to let the tool remain sitting where it is.

The method can also be used in connection with shrinkable plastic blankets or pieces which are cut in suitable sizes from a roll and wrapped around the pipe, after which the two edges extending longitudinally are led through the slot in the tool. (The method can thus be used for existing muffs and assembly elements and, moreover, regardless of their dimensions.)

By providing a method according to the invention as further disclosed in claim 2, it is ensured that the edge sections are not drawn out of the slot in the tool during the shrinking.

By providing a method according to the invention as further disclosed in claim 3, a further safeguard is achieved that the edges do not slip out of the slot in the tool during the actual shrinking.

By providing a method according to the invention as further disclosed in claim 4, an extremely tight assembly is achieved which counteracts the ingress of moisture, which can be very important in connection with certain areas of application.

The invention also concerns a holding tool for use with the method, and where this is configured as a rail with a longitudinal slot, said rail being produced in a material with high strength and rigidity.

By using such a tool, it is ensured that no outwards deflection of the slot itself occurs during the shrinking, which is very important in that there would otherwise be a risk of the edges sliding out of the slot and the assembly would not succeed, in that the necessary welding/gluing pressure is thus not achieved.

By providing the holding tool according to the invention as further disclosed in claim 6, an additional securing of the edges is achieved during the shrinking.

The invention will now be described in more detail with reference to the drawing, where
- fig. 1: shows an assembly element shaped as a T-piece and with a longitudinal slot,
- fig. 2: shows the slotted T-muff in fig. 1 in relation to pipe ends on which it is required to be mounted,
- fig. 3: shows a section through a pipe assembly, where the T-muff is placed around the pipes,
- fig. 4: shows a final result of a pipe assembly seen from above,
- fig. 5: shows an example embodiment of a tool for use in the assembly,
- fig. 6: shows a second example embodiment of a tool for use in the assembly, and
- fig. 7: shows a second example of a muff with which the method can also be used.

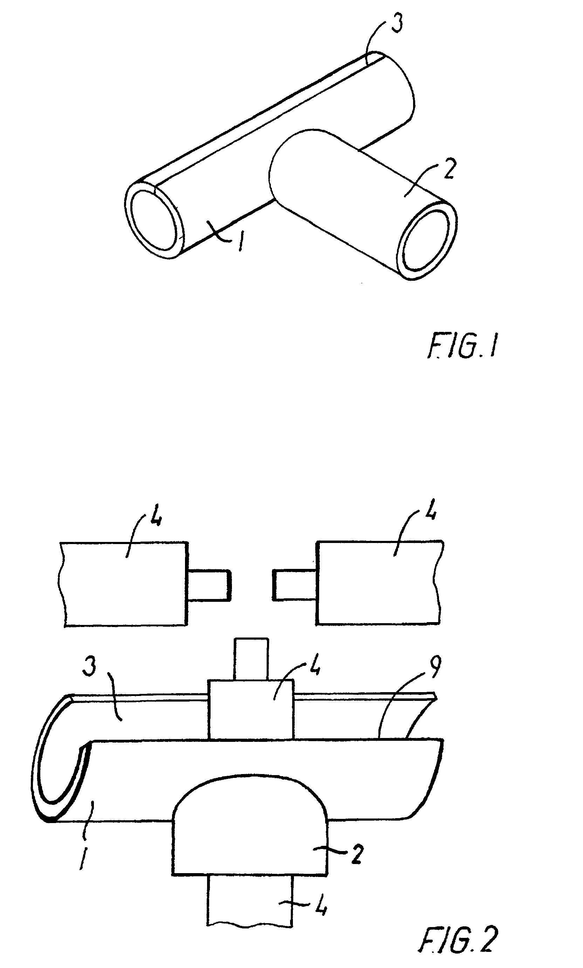

Fig. 1 shows an example of a muff with which the method according to the invention can be used. Fig. 1 shows a T-muff of expanded, shrinkable plastic, which could also be a muff without the leg of the T-piece and thus consist of only the straight pipe piece.

The T-muff thus comprises a branch 2 and the main tube 1, the main tube 1 being provided with a longitudinal slot 3 which divides it into two parts. The actual assembly is effected as shown in fig. 2, where the branch 2 is pushed down over the one part of the pipe end 4 which is to be assembled with other pipe ends, so that the tube 1, as a result of this mounting on the pipe, is now opened with a broad slot 3, whereby the flaps/edges 9 are created. Hereafter, the whole of this system is pushed over the two other pipe ends 4 which lie opposite each other, hereby creating the T-assembly. The flaps 9 are now turned into place so that these lie up against each other. The pipe ends comprise a free-lying, medium-transporting, centrally arranged pipe which is surrounded by insulation material and an outermost casing of plastic.

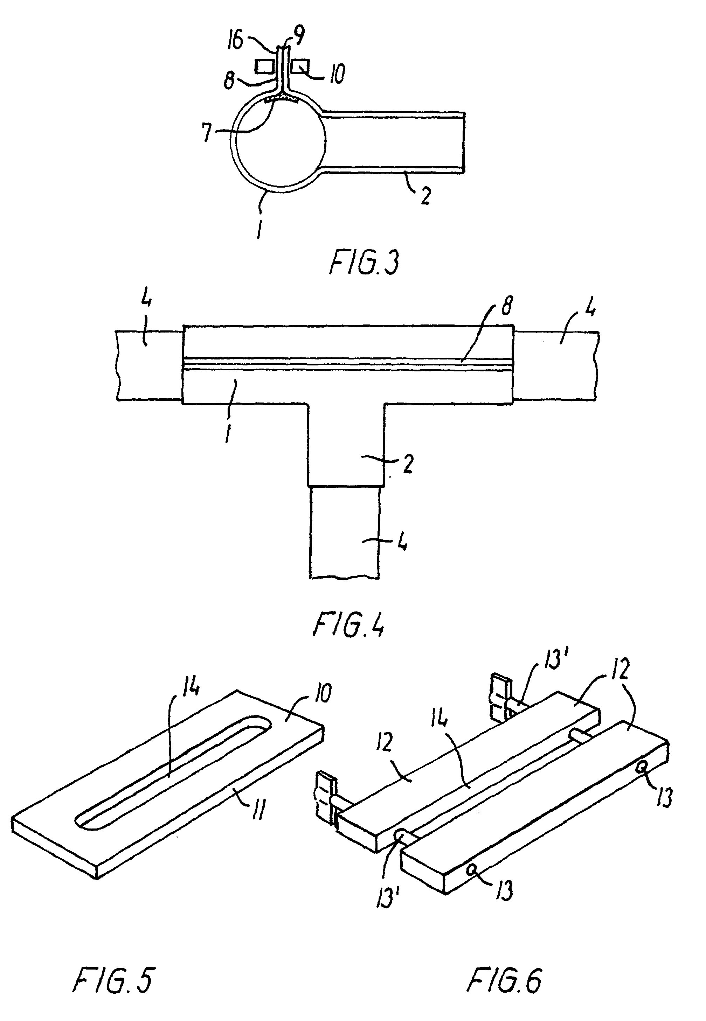

A tool, for example such as that shown in fig. 5, and which will be explained later, is now placed over the cut-line/the slot 3, and the free-lying flaps/edges 9 will be pressed up through the opening in the tool such as is shown in fig. 3. A minimum of 40 - 50 mm should be allowed to extend outside the surface of the tool before the shrinking is effected. Before this, the free-lying, underlying surface should be covered with a loose piece of plastic plate 7 on which a layer of glue/mastic 6 has been applied. When the flaps 9 have been led through the tool, the assembly is ready to be closed. This is carried out, for example, by the application of heat or in another manner, whereby the cross-bound, shrinkable material regains its original shape.

With this shrinking, that part of the flaps 9 which lies outside the slot, and which in fig. 3 is indicated by the reference figure 16, will be thickened, and the remaining material and that material which lies down in the slot itself will shrink or rather attempt to regain its original shape. As a consequence of the thickening of the free-lying edge 16, the assembly will be maintained. Due to the pressure which arises in the slot, and where it is noted that the dimensions of the slot in the tool are selected so that they correspond substantially to the thickness of the placed-together edges 9 or are increased a maximum of 50% in relation to the breadth of these edges, in this area a great pressure arises which together with the heating gives rise to a high welding pressure, the result being that the area is permanently sealed.

The heating will similarly ensure that the mastic/glue 6 lying on top of the plastic material 7 will adhere/be connected to the plastic material of the tubular piece, so that a very tight closure is created. The tubular piece is typically made of PE-based material, but other material can also be considered where it is thus possible to effect a shrinking of the material in connection with the actual mounting. Fig. 4 shows the final result, where after removal of the tool there remains a closure edge 8 which, in those cases where it is desired to remove the tool , is naturally desired to be as small as possible or removed completely.

The tool itself will now be explained in more detail with reference to figs. 5 and 6. Fig. 5 thus shows a tool 10 which is plate-shaped and which has a given thickness 11 which typically lies in the order of 1- 15 mm. This plate-shaped tool is provided along its centreline with a slot 14 through which the assembly and flaps/edges 9 can be introduced. The slot is configured with dimensions which correspond substantially to the breadth of the flaps/edges 9 or are a maximum of 50% broader than the flaps/edges 9 before these are shrunk. Fig. 6 shows a second example embodiment of the tool, here consisting of two longitudinal rails 12 which are connected to each other by means of screws 13' via threaded holes 13. Between the two rails there is thus a slot 14 through which the flaps are introduced. The rails can now be tightened together, and thus the tool configured in this manner can be used for flaps of greatly varying thickness, in that it is essential only that the slots correspond substantially to the breadth of the flaps before the shrinking is effected. Other configurations which ensure that the screws are maintained parallel with one another can also be envisaged.

As disclosed, the method according to the invention can be used with a T-muff. The T-muff is preferably configured as an injection moulded item of plastic, which after cross-binding has been expanded to form a universal product, where the tubular piece is expanded to be able to cover a very wide range of casing, for example casings from 90 old to 315 old. The branch can also be expanded to a level which covers several dimensions, for example from 66 old to 180 old and 200 old to 315 old respectively. Consequently, since just a few versions will cover the whole of the relevant range of dimensions, it is not necessary to market so many models.

Before being mounted, the T-muff can be cut anywhere along a plane at right-angles to the shrinkage direction with the view to placing the assembly in an expedient manner. The cutting of the slot 3 will result in the muff having two flaps 9 which are led through the slot 14 in the tool. When it is heated, the material will regain its original thickness and will wedge itself firmly in the slot 14. However, the material has such great forces that it will attempt to deform the tool and slide out of the tool. Therefore, it is necessary for the tool to be of great strength, possibly combined with the edge of the tool being configured with small barbs which contribute with a locking force. Such small barbs are obtained, for example, by the items (metallic) being water-cut, in that the water-cutting always leaves a smooth side and a side with fraze. This fraze is utilised to increase the holding effect. The tool 10 can be made of steel, such that the surplus material is cut off when the installation has been completed, after which the tool can be dismounted. However, this requires that there is the possibility of loosening the tool from the item. If the assembly is desired to be placed in against a wall where the space conditions do not allow the tool to be dismounted, compensation for this can be made by:
- The rail is produced in stainless steel and is allowed to remain after completion of the installation.
- The rail is produced in ceramic material so that the rail can be broken and a subsequent cutting of the assembly is possible when the mounting has been completed.

A second configuration for the application can be envisaged as being a repair muff assembled according to the invention. A straight muff for use with the method can be formed as follows:
- A shrinkable blanket which it is envisaged can be cut from rolled-up lengths.
- An over-expanded muff which can be cut up to fit the desirable size of muff.
- Several muffs which can be placed together and used as large muffs which, from the expansion point of view, lie outside the possibilities regarding production and economics.

Regardless of which of the above possibilities is envisaged as being used, they will all have two flaps in common. The flaps 9 are introduced through the slot 14, and the shrinkage can be begun. The further development is described above.

The special feature of the invention is that the expanded plastic, which assumes a smaller thickness than the initial item, can be led through a closer defined slot. Therefore, no special configurations are required, neither in the injection moulded nor the expanded material. When heated, the plastic material regains its original thickness, after which the material wedges itself firmly in the slot and hereby locks itself.

The shrink-muff can be configured to suit requirements, primarily as a straight element expanded to a given diameter. The muff consists of a closed muff which can be cut up along a surface as desired. The same muff can hereby be used for various diameters without any previous knowledge concerning that diameter for which the muff is to be used. If the muff is configured as a T-piece, the leg is pushed in over the branch, in that the main tubular piece is cut up at a place which is suitable for the installation. When the medium pipes have been welded together and insulation has been placed in position in the T-piece, for example in the form of half-shells, the T-muff is drawn up over the insulation. An under layer of plastic 7 is placed at the point where the assembly is required, and this is given a coating of glue, mastic 6 or both in accordance with requirements. The main tube 1 of the T-muff is cut up and led through the slot in the tool. The flaps on the shrink part (the muff) are drawn so far up that the muff is more or less fixed, and is thereafter pushed down against the glue/mastic. The muff is now shrunk, in that the first thing to be heated are the flaps which stick up out of the slot in the tool, after which the plastic material regains its original thickness and hereby becomes thicker, and which hereby locks the muff. The remainder of the muff is shrunk into place, and when the muff has cooled the surplus material can subsequently be cut away and the tool possibly removed. The muff is finished.

In order for the muff to be aesthetically satisfactory, technically tight, robust and convenient to mount, great demands are placed on the tool. The slot in the tool can be established as an open tool which can close around the flaps on the shrink-muff, or a closed slot. However, a closed slot requires that the breadth of the slot is configured to suit the expanded cross-section plus a slight amount of "mounting clearance". The tool must be very rigid in relation to dimensions and weight, in that the slot will be influenced by the forces in the plastic material which are released by shrinkage. These forces can assume right up to 3 kg/cm² in all directions. When the tool deflects, the slot gets larger, and if the tool is not rigid enough, the plastic material slips out through the slot and the locking effect is lost. If the tool is too heavy, it will weigh down the plastic material when this is heated and will force it into an unfavourable position, in that the shrinkage forces are not sufficiently great to draw the muff into place.

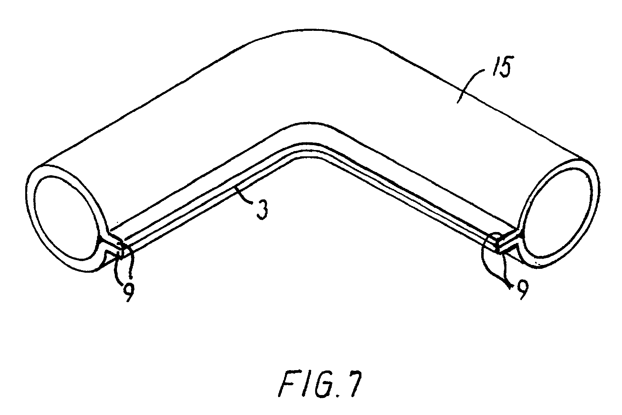

A third embodiment where the method finds application is on an assembly muff such as that shown in fig. 7, which thus consists of a bent muff with a bend 15 of around 90°, and where a slot 3 is provided in those parts of the tube piece which face towards each other, and where the resulting flaps will naturally protrude in a relatively rigid manner.

A fourth embodiment for the application can be any irregular shape which is defined as a blank in cross-bound material, and which is expanded from one diameter to another by the thickness being correspondingly reduced. Due to the irregular shape, it is necessary for the expansion to be carried out so that the flaps 9 can be introduced into a slot 14. This is necessary for the reason that the expansion of an irregular shape often results in the edges being very stiff, and are hereby difficult to lead through a slot. The tool can possibly be configured with the same irregular shape as the finished, shrunk item.

The breadth of the slot is preferably in the order of at least 1.5 mm, in that when it is expanded, the muff material preferably has a size of 1.5 - 5 mm (which, however, can assume a size of 12 - 15 mm), and which will thus after heating regain dimension of over the 2 - 5 mm. The tool itself is made of a relatively rigid material, for example ceramic. In such a case it will be typical for the tool to be knocked off after the shrinking has been carried out. In cases where the tool is made of ceramic with an opening/slot in the centre, the ends of this slot can expediently be provided with a rounding diameter which exceeds the breadth of the slot. The tool can also be made of a tile material or of metals with high strength and rigidity. The important point here is that no deflection of the slot occurs under the actual shrinking forces, in that these shrinking forces can be extremely great, and where it is thus important that the flaps do not slide out of the slot during the assembly.

In the assembly of muffs which are large, for example between 500 and 600 mm, a relatively high moment of inertia is required in order to achieve adequate length (I_{y}) and transverse stiffness (Iₓ).

With a deflection of a maximum of 0.5 mm in the x plane = 0.5 mm, Iₓ must be a minimum of 60750 mm⁴. With a deflection of a maximum of 2 mm in the y plane = 2 mm, I_{y} must be a minimum of 2000 mm⁴.

## Claims

1. Method for the assembling and/or closing of pipe materials by means of an assembly piece made of a shrinkable plastic material, said assembly piece comprising at least two edge sections (9) which face each other and extend substantially parallel with the longitudinal axis of the pipe items, the edge sections (9) extending substantially at right-angles to the shrinkage direction, **characterized in that** said edge section (9) are introduced through a slot/opening (14) in a holding tool (10) so that the edges of the edge sections (9) lie freely in relation to the holding tool (10), after which the assembly piece is shrunk so that the free-lying edges are thickened.

2. Method according to claim 1, **characterized in that** the edge sections (9) are configured with a substantially uniform thickness dimension measured from the edge and for a distance at right-angles from said edge.

3. Method according to any of the foregoing claims, **characterized in that** the opening/slot (14) in the tool is of a breadth which corresponds substantially to 1 - 1.5 times the thickness of the two edge sections (9) when these are placed together before the shrinking.

4. Method according to any of the foregoing claims, **characterized in that** before the shrinking, a piece of plastic (7) to which glue/mastic (6) has been applied is placed under the assembly slot (3) which arises by the bringing together of the edge sections (9).

5. Holding tool (10) for use of the method according to any of the foregoing claims, **characterized in that** this is formed as a rail (12) with a longitudinal opening/slot (14), said rail (12) being made of a material with high strength and rigidity.

6. Holding tool (10) according to claim 5, **characterized in that** barbs are provided in the slot (14).

## Patentansprüche

1. Verfahren zum Montieren und/oder Verschließen von Rohrmaterialien mittels eines Montagestücks aus schrumpfbarem Kunststoff, wobei das Montagestück mindestens zwei Kantenabschnitte (9) aufweist, die einander zugewandt sind und im wesentlichen parallel zur Längsachse der Rohre und im wesentlichen rechtwinklig zur Schrumpfrichtung verlaufen, **dadurch gekennzeichnet, daß** die Endabschnitte (9) durch einen Schlitz/eine Öffnung (14) derart in ein Haltewerkzeug (10) eingeführt werden, daß die Kanten der Kantenabschnitte (9) bezüglich des Haltewerkzeugs (10) freiliegen, woraufhin das Montagestück derart geschrumpft wird, daß die freiliegenden Kanten verdicken.

2. Verfahren nach Anspruch 1, **dadurch gekennzeichnet, daß** die Kantenabschnitte (9) mit im wesentlichen gleichmäßiger Dickenabmessung, gemessen von der Kante über eine senkrecht dazu verlaufende Strecke, gestaltet sind.

3. Verfahren nach einem der vorhergehenden Ansprüche, **dadurch gekennzeichnet, daß** die Öffnung/der Schlitz (14) in dem Werkzeug eine Breite hat, die im wesentlichen der einfachen bis anderthalbfachen Dicke der beiden Kantenabschnitte (9) in ihrem vor der Schrumpfung zusammengelegten Zustand entspricht.

4. Verfahren nach einem der vorhergehenden Ansprüche, **dadurch gekennzeichnet, daß** vor dem Schrumpfen der Montageschlitz (3), der beim Zusammenführen der Kantenabschnitte (9) entsteht, mit einem Kunststoffteil (7) unterlegt wird, auf das Klebstoff/Mastix (6) aufgetragen ist.

5. Haltewerkzeug (10) zur Verwendung in dem Verfahren nach einem der vorhergehenden Ansprüche, **dadurch gekennzeichnet, daß** es als Schiene (12) mit einer länglichen Öffnung/Schlitz (14) aus einem Material hoher Festigkeit und Steifigkeit gestaltet ist.

6. Haltewerkzeug (10) nach Anspruch 5, **dadurch gekennzeichnet, daß** in dem Schlitz (14) Widerhaken vorgesehen sind.

## Revendications

1. Procédé d'assemblage et/ou de fermeture de matériaux de tuyaux au moyen d'une pièce d'assemblage composée d'un matériau en plastique rétractable, ladite pièce d'assemblage comprenant au moins deux sections de bord (9) qui se font face et s'étendent sensiblement parallèlement à l'axe longitudinal des éléments de tuyau, les sections de bord (9) s'étendant sensiblement à angle droit par rapport à la direction de la rétractation, **caractérisé en ce que** lesdites sections de bord (9) sont introduites dans une fente/ouverture (14) dans un outil de retenue (10) de sorte que les bords des sections de bord (9) sont placées librement par rapport à l'outil de retenue (10), après quoi la pièce d'assemblage est rétractée de sorte que les bords placés librement sont épaissis.

2. Procédé selon la revendication 1, **caractérisé en ce que** les sections de bord (9) sont configurées avec une dimension d'épaisseur sensiblement uniforme, mesurée à partir du bord et pour une distance à angle droit dudit bord.

3. Procédé selon l'une quelconque des revendications précédentes, **caractérisé en ce que** l'ouverture/fente (14) dans l'outil présente une largeur qui correspond sensiblement à 1 à 1,5 fois l'épaisseur des deux sections de bord (9) lorsqu'elles sont placées ensemble avant la rétraction.

4. Procédé selon l'une quelconque des revendications précédentes, **caractérisé en ce que** avant la rétraction, une pièce de plastique (7) sur laquelle a été appliqué de la colle/du mastic (6) est placée sous la fente d'assemblage (3) qui apparaît lorsque l'on assemble les sections de bord (9).

5. Outil de retenue (10) pour la mise en oeuvre du procédé selon l'une quelconque des revendications précédentes, **caractérisé en ce qu'**il est formé sous la forme d'un rail (12) avec une ouverture/fente (14) longitudinale, ledit rail (12) étant composé d'un matériau très rigide et très résistant.

6. Outil de retenue (10) selon la revendication 5, **caractérisé en ce que** des ergots sont prévus dans la fente (14).
